# EUROPÄISCHE PATENTSCHRIFT

(11) **EP 2 920 369 B1**
(45) Veröffentlichungstag und Bekanntmachung des Hinweises auf die Patenterteilung: **29.03.2017**
(21) Anmeldenummer: 13716321.8
(22) Anmeldetag: 17.04.2013
(51) Int. Cl.: E01F 7/04

(54) **AUFREISSBREMSE**
TEARING BRAKE
FREIN À DÉCHIREMENT

(30) Priorität: 14.11.2012 DE 202012010932 U
(43) Veröffentlichungstag der Anmeldung: 23.09.2015
(73) Patentinhaber: Pfeifer Isofer AG, 8934 Knonau (CH)
(72) Erfinder: FULDE, Marcel, 8800 Thalwill (CH); MÜLLER, Markus, 6312 Steinhausen (CH)
(74) Vertreter: Hoffmann Eitle
(86) Internationale Anmeldenummer: PCT/EP2013/057989
(87) Internationale Veröffentlichungsnummer: WO 2014/075817

(56) Entgegenhaltungen:
- EP-A1- 1 469 130
- WO-A1-95/29738
- DE-A1- 1 531 512
- DE-U1-202009 017 362
- JP-A- 2002 227 898
- US-A- 3 337 004

## Beschreibung

### TECHNISCHES GEBIET

Die vorliegende Erfindung betrifft ein Bremselement zur Absorption kinetischer Energie in einer Auffangvorrichtung, insbesondere für Steinschlag, Murgang, Hangmuren, Rutschungen oder Baumschlag. Das Bremselement umfasst einen Grundkörper mit einer ersten und einer zweiten Befestigungsstelle, wobei an der ersten und zweiten Befestigungsstelle jeweils ein Zugelement derart angeordnet sein kann, dass durch die Zugelemente eine auf das Bremselement zwischen den Befestigungsstellen wirkende Zugkraft angelegt werden kann, wobei die erste und die zweite Befestigungsstelle einen Abstand entlang der Zugkraft voneinander haben.

Ferner betrifft die Erfindung eine Auffangvorrichtung mit einem solchen Bremselement sowie ein Verfahren zur Herstellung eines solchen Bremselements.

### STAND DER TECHNIK

Grundsätzlich sind Bremselemente für Auffangvorrichtungen bewegter Massen wie beispielsweise die oben genannte Auffangvorrichtung bekannt. Sie dienen dazu, die Widerstandsfähigkeit solcher Auffangvorrichtungen gegenüber kurzen, heftigen Einschlägen von bewegten Massen zu erhöhen. Insbesondere wird durch ein solches Bremselement grundsätzlich bewirkt, dass ein auf Zug belastetes Element, wie beispielsweise ein Rückhalteseil oder die Verankerung, bei einem intensiven Aufprall eines Körpers nicht reißt. Durch das Bremselement wird die durch den Aufprall auf die Auffangvorrichtung übertragene kinetische Energie kontinuierlich abgebaut, wobei im Stand der Technik hierfür verschiedene Systeme bekannt sind. Eine Form derartiger Bremselemente ist dazu ausgestaltet, kinetische Energie in Verformungsenergie umzuwandeln, um dadurch einen kontinuierlichen Energieabbau zu erzielen. Beispiele hierfür sind aus der EP 1 156 158 B1 und der EP 1 302 595 A1 bekannt. Bei diesen Systemen wird ein Rückhalte- Abspannseil durch ein Bremselement geführt, das sich im Wesentlichen rechtwinklig zum benachbarten Verlauf des Rückhalteseils erstreckt und bei Überschreiten eines vorbestimmten Betrages einer Zugkraft auf das Rückhalteseil zusammengedrückt oder aufgerissen wird. Nachteilig an diesen Vorrichtungen ist unter anderem, dass sie eine verhältnismäßig große Ausdehnung aufweisen. In beiden Fällen ist es nötig, dass die Bremsvorrichtung mindestens die halbe Länge eines gewünschten Bremsweges aufweist, wobei der Bremsweg im Zusammenhang mit der vorliegenden Erfindung einer Seillänge entspricht, die über das Bremselement gegenüber einem unbelasteten Zustand des Rückhalteseils freigegeben werden kann, d.h. um die das Seil nachgeben kann. Ferner ist bei diesen Vorrichtungen vorgesehen, dass das Seil über relativ kleine Krümmungsradien in das Bremselement eingeführt und durch das Bremselement hindurchgeführt wird. Hierbei entstehen scharfe Umlenkungen des Seils, wodurch dieses im Belastungsfall beschädigt oder überlastet werden kann.

WO 2009/137951 A1 offenbart eine Vorrichtung zur Stoßdämpfung von Seilkonstruktionen, beispielsweise für Steinschlagverbauungen, bei der vorzugsweise mehrere Bänder oder Seile bei starker Belastung über einen Umlenkmechanismus gedehnt werden, um einen Teil der Energie eines Aufpralls aufzunehmen. Es gibt auch Vorrichtungen, bei denen ein im Wesentlichen rechtwinklig geformtes Walzprofil bei starker Belastung in ein im Wesentlichen linear geformtes Profil umgeformt wird, wenn eine starke Belastung auf das Profil wirkt.

Beiden Vorrichtungen ist das Problem gemein, dass eine nicht zu vermeidende Verschmutzung der Vorrichtungen Reibung verursacht, die das Deformationsvermögen und vor allem die Vorhersagbarkeit der Deformation der Bänder oder Seile bzw. des Walzprofils stark beeinträchtigt. Es ist bei diesen Vorrichtungen also notwendig, diese ständig zu reinigen, um eine ordnungsgemäße Funktion sicherzustellen.

Aus der EP 1 469 130 A1 ist ein anderes Bremselement bekannt, bei dem eine schraubenförmige Spirale aus plastisch verformbarem Material eingesetzt wird, die sich bei starker Zugbelastung verformt und dadurch die von der Masse auf die Auffangvorrichtung übertragene kinetische Energie in Verformungsenergie umwandelt. Nachteilig an dieser Vorrichtung ist jedoch, dass sie immer noch relativ viel Platz benötigt und nicht sehr vielseitig einsetzbar ist. Denn die schraubenförmige Spirale kann nur ungenügend an verschieden große Energieeinträge angepasst werden, da der Energieabbau nur durch Aufbiegung und Torsion erfolgt. Darüber hinaus lässt sich an der schraubenförmigen Spirale selbst nicht ohne weiteres ablesen, in welchem Maße sie bereits belastet wurde und noch zur Aufnahme weiterer Belastungen geeignet ist. Mit anderen Worten muss die schraubenförmige Spirale auch bei nicht ausgereizter Belastung ausgetauscht werden, um zuverlässig sicherstellen zu können, dass weiterhin ausreichend kinetische Energie durch sie aufgenommen werden kann, falls die Auffangvorrichtung nochmals belastet wird. Ein Weiterverwenden der schraubenförmigen Spirale ist daher nicht zuverlässig möglich.

Ähnlich ist aus WO 95/29738 A1 eine Energieaufnahmevorrichtung bekannt, die in einer Auffangvorrichtung eingesetzt werden kann und Energie aufnimmt, indem ein zu einer Doppelspirale gebogener Metallstreifen durch Zugkraft auseinandergerollt wird. Die plastische Verformung des Metallstreifens nimmt somit zumindest einen Teil der auf die Auffangvorrichtung einwirkenden Energie auf. Hierbei bestehen jedoch grundsätzlich dieselben Nachteile, wie sie oben im Zusammenhang mit den ähnlichen Vorrichtungen beschrieben wurden.

### DARSTELLUNG DER ERFINDUNG

Vor dem Hintergrund des Standes der Technik liegt die Aufgabe der vorliegenden Erfindung darin, ein Bremselement des obigen technischen Gebiets breitzustellen, das gleichzeitig wartungsfrei, platzsparend und seilschonend ist und darüber hinaus die Möglichkeit bietet, nach einer nicht ausreizenden Belastung weiter zuverlässig eingesetzt zu werden. Außerdem besteht eine Aufgabe der vorliegenden Erfindung darin, ein Bremselement bereitzustellen, das auf besonders einfache Weise auf unterschiedlich große kinetische Energien abgestimmt werden kann, die durch das Bremselement aufgenommen werden sollen.

Diese Aufgabe wird durch ein Bremselement nach Anspruch 1 gelöst. Weitere vorteilhafte Ausgestaltungen des Bremselements ergeben sich aus den Unteransprüchen.

Das erfindungsgemäße Bremselement zur Absorption kinetischer Energie in einer Auffangvorrichtung, insbesondere für Steinschlag, Murgang, Hangmuren, Rutschungen oder Baumschlag umfasst einen Grundkörper mit einer ersten und einer zweiten Befestigungsstelle, wobei an der ersten und zweiten Befestigungsstelle jeweils ein Zugelement derart angeordnet sein kann, dass durch die Zugelemente eine auf das Bremselement zwischen den Befestigungsstellen wirkende Zugkraft angelegt werden kann. Dabei haben die erste und die zweite Befestigungsstelle einen Abstand entlang der Zugkraft voneinander. Das Bremselement ist erfindungsgemäß derart ausgestaltet, dass sich der Abstand zwischen den Befestigungsstellen durch kontinuierliches Aufreißen und Verformen des Grundkörpers entlang einer vorbestimmten Aufreißstrecke vergrößert, wenn die Zugkraft einen vorbestimmten Betrag übersteigt. Mit anderen Worten entfernen sich die Befestigungsstellen mit den daran angebrachten Zugelementen voneinander durch Aufreißen und Verformen des Grundkörpers entlang einer vorgegebenen Aufreißstrecke oder Form, wodurch die Zugelemente der Zugkraft über den vergrößerten Abstand zwischen den Befestigungsstellen nachgeben können und damit eine Überbeanspruchung der Zugelemente verhindert wird. Die Kräfte in den Seilen sowie im gesamten Schutzsystem können somit auf die erforderlichen Größen limitiert werden.

Eine Auffangvorrichtung im Sinne der vorliegenden Erfindung kann insbesondere ein Auffangnetz sein, das üblicherweise für Steinschlag, Murgang usw. eingesetzt wird. Ein solches Auffangnetz kann jedoch grundsätzlich auch für alle anderen bewegten und abzubremsenden Massen vorgesehen sein, beispielsweise als Auffangnetz auf Baustellen, am Straßenrand oder an Seilbahnen, Kränen oder Aufzügen. Die erste und zweite Befestigungsstelle kann insbesondere durch eine Öse, mehrere Ösen, einen oder mehrere Befestigungshaken oder ein oder mehrere ähnliche(s) Befestigungselement(e) oder eine Vorrüstung für ein oder mehrere solche(s) Befestigungselement(e) gebildet sein, worüber der Grundkörper mit jeweils einem Zugelement gekoppelt werden kann, sodass eine auf ein erstes Zugelement wirkende Zugkraft durch den Grundkörper auf das zweite Zugelement übertragen werden kann. Dabei ist es auch möglich, dass statt einer Befestigungsvorrichtung lediglich ein Ort bestimmt ist, an dem ein Zugelement angebracht werden kann oder angebracht ist. Beispielsweise können die Zugelemente jeweils Teile eines Rückhalteseils für ein Auffangnetz sein, die bei Beanspruchung des Auffangnetzes mit einer Zugkraft beaufschlagt werden. Diese Zugkraft wird dann auch auf den Grundkörper des Bremselements übertragen.

Das erfindungsgemäße kontinuierliche Aufreißen und Verformen des Grundkörpers entlang der vorbestimmten Aufreißstrecke bedeutet, dass mit jeder Vergrößerung des Abstands zwischen den zwei Befestigungsstellen ein weiteres Aufreißen und ein weiteres Verformen des Grundkörpers einhergehen. Dieses kontinuierliche Aufreißen und Verformen umfasst im vorliegenden Fall auch ein schrittweises Aufreißen und Verformen, das heißt das kontinuierliche Aufreißen und Verformen kann auch in mehreren aufeinanderfolgenden diskreten Abschnitten erfolgen. Das kontinuierliche Aufreißen und Verformen ist jedoch abzugrenzen von einem einmaligen Aufreißen einer Sollbruchstelle und anschließend ausschließlichen Verformen, ohne dass ein weiteres Aufreißen stattfindet.

Dabei wird die Aufreißstrecke in dem Grundkörper, entlang der das Bremselement aufreißt und sich verformt, durch eine Sollbruchstellenanordnung vorbestimmt. Eine solche Sollbruchstellenanordnung kann insbesondere einen Steg einer oder mehrerer querschnittsreduzierter Materialbrücken aufweisen, eine oder mehrere Perforationen, eine oder mehrere Einkerbungen oder eine oder mehrere Blindbohrungen. Es ist auch möglich, dass die Sollbruchstellenanordnung durch einen oder mehrere beabstandete Schweißpunkte gebildet wird. Die Sollbruchstellenanordnung dient dazu, die vorbestimmte Aufreißstrecke, entlang welcher der Grundkörper beim Überschreiten einer vorbestimmten Zugkraft aufreißt, zu definieren und auf diese Weise ein hinsichtlich des Schwellenwerts für den Beginn des Aufreißens und Verformens und auch hinsichtlich der Form, entlang der der Grundkörper aufreißt, determiniertes System zu bilden. Dadurch ist auch determiniert, welchen Bremsweg das Bremselement den daran angebrachten Zugelementen zur Verfügung stellen kann.

Durch das Aufreißen von Materialbrücken der Sollbruchstellenanordnung wird die kinetische Energie, die durch das Bremselement abgebaut werden soll, bereits zu einem wesentlichen Teil umgewandelt. Darüber hinaus wird durch das Verformen des Bremselements weitere Energie abgebaut, sodass das erfindungsgemäße Bremselement besonders effizient beim Abbau von kinetischer Energie ist, ohne dabei viel Platz oder viel Material zu erfordern. Die Sollbruchstellenanordnung kann dabei bevorzugt Perforationen aufweisen, die entweder nur oberflächlich oder in Dickenrichtung durchgehend ausgestaltet sind. Mit anderen Worten können die Perforationen den Grundkörper jeweils vollständig durchdringen oder nur einen Teil von der Oberfläche aus im Bereich der gewünschten Sollbruchstelle abtragen, um somit eine querschnittsreduzierte Materialbrücke zu erzeugen.

In einer bevorzugten Ausführungsform ist die Sollbruchstellenanordnung kurvenförmig. Durch eine kurvenförmige Sollbruchstellenanordnung ist es möglich, das Material des Grundkörpers bestmöglich für das Aufreißen und Verformen des Bremselements zu nutzen. Eine kurvenförmige Sollbruchstellenanordnung führt auch dazu, dass der Grundkörper, der entlang der Sollbruchstellenanordnung aufgerissen wird, zunächst, d.h. vor dem Verformen, eine kurvenförmige Gestalt hat. Dieser kurvenförmige Grundkörperteil kann sich dann bei Belastung noch strecken, um einen maximalen Abstand zwischen den beiden Befestigungsstellen des Grundkörpers zu ermöglichen, was weitere Verformungsenergie erfordert und somit zusätzliche kinetische Energie abbauen kann.

Die Aufreißstrecke, insbesondere also die Sollbruchstellenanordnung, bildet vorzugsweise eine Doppelspirale in dem Grundkörper, an deren einem Ende die erste Befestigungsstelle angeordnet ist und an deren anderem Ende die zweite Befestigungsstelle angeordnet ist, wobei beide Befestigungsstellen in einem äußeren Bereich der Spirale angeordnet sind. Die Spirale entrollt sich dabei durch kontinuierliches Aufreißen und Verformen des Grundkörpers, wenn die Zugkraft einen vorbestimmten Wert übersteigt. Die Spiralform der Aufreißstrecke, insbesondere der Sollbruchstellenanordnung, ist dabei so gestaltet, dass der durch die Aufreißstrecke, insbesondere die Sollbruchstellenanordnung, vorbestimmte Aufreißweg außen, d.h. von den randseitigen Befestigungsstellen aus, beginnt. Hierfür hat die Aufreißstrecke die Form einer Doppelspirale oder Doppelschnecke.

Unter einer (Doppel-)Spirale wird im Zusammenhang mit dieser bevorzugten Ausführungsform besonders bevorzugt eine ebene (Doppel-)Spirale verstanden, d. h. eine im Wesentlichen zweidimensionale (Doppel-)Spirale, deren Ausdehnung in einer zweidimensionalen Ebene wesentlich (mindestens um den Faktor 10) größer ist als in der senkrecht hierzu verlaufenden Richtung. Es ist jedoch grundsätzlich auch möglich, dass die (Doppel-)Spirale in einer gekrümmten Ebene liegt. In einer anderen Ausführungsform kann die (Doppel-)Spirale auch schraubenförmig ausgestaltet sein, d.h. Aufreißstrecke, insbesondere die Sollbruchstellenanordnung kann sich über die Oberfläche eines Zylinders oder Kegels erstrecken, so dass dieser aufgerissen und verformt werden kann. Hierbei muss der zylinder- oder kegelförmige Grundkörper sich nicht nur verformen, sondern auch aufreißen, um einen Abstand zwischen zwei Befestigungsstellen zu vergrößern.

Auf diese Weise ist es möglich, ein kompaktes Bremselement mit einem kompakten Grundkörper bereitzustellen, der bei (doppel-)spiralförmiger Aufreißstrecke, insbesondere Sollbruchstellenanordnung bei Übersteigen eines vorbestimmten Betrags der Zugkraft dazu führt, dass sich der Grundkörper entlang der Spiralform entrollt, das heißt sich verformt, insbesondere aufreißt und sich verformt. Bei Anordnung der ersten und zweiten Befestigungsstelle jeweils an einem Ende der (Doppel-)Spirale kann die gesamte Länge der (Doppel-)Spirale in entrolltem Zustand dazu genutzt werden, eine Zugkraft auf die Zugelemente abzudämpfen, mit anderen Worten, als Bremsweg zu dienen. Darüber hinaus ist es auch möglich, dass die (Doppel-)Spirale nur teilweise verformt, bevorzugt aufgerissen und verformt, also gestreckt wird, wobei das Bremselement so ausgestaltet werden kann, dass der Grundkörper zunächst im Bereich der Befestigungsstellen sich verformt, bevorzugt aufreißt und sich verformt und die (Doppel-)Spirale dadurch entrollt.

Die Doppelspirale weist zwei gegenläufige, ineinander übergehende Spiralen auf. Dadurch kann sich der Grundkörper besonders effizient kontinuierlich verformen, bevorzugt aufreißen und sich verformen, das heißt eine besonders kompakte Bauform des Bremselements ist möglich, während gleichzeitig ein langer Bremsweg realisiert werden kann. Gleichzeitiges Entrollen der beiden Teile der Doppelspirale an ihren jeweils außen liegenden Enden führt dann nämlich zu einem gleichsinnigen Drehen der beiden Teile und damit der Doppelspirale.

Bevorzugt wird die Doppelspirale, weil sich hier zwischen dem Bremselement und den Zugelementen keine Drehbewegungen vollziehen, was bei einer Einzelspirale Gegenmaßnahmen erfordern würde.

Zusätzlich kann die Aufreißstrecke auch eine gerade, linienförmige, bevorzugt mittig angeordnete Perforation in einem Bandstahl sein, so dass sie ähnlich einem Reißverschluss aufgerissen und verformt werden kann. Eine weitere Alternative liegt in einer Blechscheibe als Grundkörper mit mäanderförmiger Perforation, also Aufreißstrecke. Insbesondere bei den vorstehend erläuterten Ausführungen kann das Aufreißen der Aufreißstrecke, insbesondere also der Materialbrücken, durch Druckscherung erfolgen. Beispielsweise kann das Aufreißen durch einen die Materialbrücken durchtrennenden Keil erfolgen, der mit einer der Befestigungsstellen des Bremselements verbunden ist.

Bei einem zylindermantelförmigen Grundkörper ist auch eine schraubenförmige Ausgestaltung der Aufreißstrecke über die Zylindermantelfläche möglich. Durch die schraubenförmige Aufreißstrecke wird aus dem zylindermantelförmigen Grundkörper in gestrecktem Zustand ein im Wesentlichen linear ausgedehnter Streifen aus dem Material des Grundkörpers.

Mit Vorteil ist der Grundkörper des Bremselements scheibenförmig. Dabei kann die Scheibe grundsätzlich bezüglich ihres Durchmessers und ihrer Dicke entsprechend den Erfordernissen des Schutzsystems beliebig variieren und angepasst werden. Eine dickere Scheibe hat dabei den Effekt, dass mehr Energie nötig ist, um den Grundkörper zu verformen, wobei die allein für das Aufreißen nötige Energie durch Anpassung der Sollbruchstellenanordnung eingestellt werden und von der Dicke der Scheibe weitgehend unbeeinflusst bleiben kann. Das Bremselement kann somit durch Einstellen der für das Aufreißen nötigen Energie besonders leicht an verschiedene zu erwartende, aufzunehmende Energien angepasst werden, ohne dass dabei die Dicke des Grundkörpers verändert werden muss.

Der Durchmesser des Grundkörpers wirkt sich auf die Länge des Bremselements in seinem vollständig gestreckten Zustand aus, wobei diese Länge in Wechselwirkung mit der Breite des gestreckten Grundkörpers steht. Eine größere Breite des gestreckten Grundkörpers erfordert bei gleicher Länge einen größeren Scheibendurchmesser.

Unter einer scheibenförmigen oder plattenförmigen Form wird vorliegend eine Form verstanden, deren zweidimensionale Ausdehnungen wesentlich größer sind als ihre senkrecht hierzu bestimmte Dicke. Es handelt sich bei einem scheibenförmigen oder plattenförmigen Grundkörper also um ein im Wesentlichen flächiges, zweidimensionales Element, dessen Dicke senkrecht zu der flächigen Ausdehnung mindestens um einen Faktor von 10 kleiner ist. Das flächige Element kann dabei gekrümmt sein, ist jedoch bevorzugt ungekrümmt. Bevorzugt ist der scheibenförmige Grundkörper dabei im Wesentlichen kreisförmig oder oval. Ein kreisförmiger oder ovaler Grundkörper ermöglicht eine besonders effiziente Gestaltung einer Aufreißstrecke, insbesondere einer Sollbruchstellenanordnung in Form einer Doppelspirale. Diese Ausgestaltung einer Aufreißtrecke bzw. Sollbruchstellenanordnung hat sich als besonders vorteilhaft erwiesen. Hierzu ist zu berücksichtigen, dass mögliche Ösen oder andere Gestaltungen des Grundkörpers als Befestigungsstelle für die Kreis- oder Ovalform des Grundkörpers unschädlich sein sollen, d.h. ein Grundkörper, Außenkontur nur wegen dieser Befestigungsstellen von einer Kreis- oder Ovalform abweicht, soll dennoch als kreis- oder ovalförmig angesehen werden.

In einer bevorzugten Ausführungsform weist der Grundkörper mehrere aufeinander und parallel zueinander angeordnete Scheiben auf. Diese Scheiben können dann in einer Sandwich-Konstruktion miteinander verbunden werden oder getrennt voneinander parallel zueinander liegen. Mit Vorteil werden die einzelnen Scheiben des Grundkörpers im Bereich der Befestigungsstellen miteinander verbunden, sodass eine Zugkraft, die zwischen den Befestigungsstellen wirkt, gleichmäßig auf die mehreren aufeinander und parallel zueinander angeordneten Scheiben übertragen wird und ein gleichmäßiges Aufreißen und Verformen der mehreren Teile des Grundkörpers bewirkt.

Mit Vorteil ist der Grundkörper aus Metall, insbesondere aus Stahl, oder aus einem Verbundwerkstoff gefertigt. Derartige Materialien lassen sich gut hinsichtlich ihrer gezielten Schwächung als Sollbruchstellenanordnung und ihrer plastischen Verformbarkeit einstellen, sodass auch durch die Materialwahl gezielt Einfluss auf die Aufreißbarkeit und Verformbarkeit des Grundkörpers Einfluss genommen werden kann. Die bei einer Sandwichkonstruktion verwendeten Grundkörper können hierbei auch aus verschiedenen Materialien bestehen, Schichten verschiedener Dicken aufweisen oder differenziert behandelt worden sein. Weiter wird bevorzugt, das Bremselement als Gussteil auszubilden. Dies ermöglicht eine sehr effiziente Herstellung des Bremselements.

Bevorzugt weist das Bremselement eine Markierung auf, die eine Restnutzlänge des Bremselements anzeigt. Bei einer solchen Markierung kann es sich insbesondere um graphische Elemente handeln, beispielsweise Aufdrucke oder Einkerbungen, die den Grad der bisherigen Inanspruchnahme des Bremselements anzeigen können. Somit ist es besonders leicht möglich, bei nicht ausgereiztem Aufreißweg das erneute Anlaufen des Elements durch eine nochmalige Belastung zu erlauben, ohne Unsicherheiten hinsichtlich der verbleibenden Belastbarkeit des Bremselements zu haben. Damit ist eine mehrfache Verwendung des Bremselements ohne Sicherheitsrisiken möglich.

In einer bevorzugten Ausführungsform weist das Bremselement einen Deformationssensor auf, um ein Aufreißen und/oder Verformen des Grundkörpers zu detektieren. Ein solcher Deformationssensor kann beispielsweise durch einen Sensor gebildet werden, der das Aufreißen der Sollbruchstellenanordnung an einer bestimmten Position, beispielsweise an der Position einer Markierung, erkennt. Ein solcher Sensor ist ein elektronisches Element, das eine beispielsweise elektronische Weiterverarbeitung der Information, dass das Bremselement über ein festgelegtes Maß hinaus verformt wurde, ermöglicht.

Besonders bevorzugt weist das Bremselement ferner einen Sender auf, um ein von dem Deformationssensor detektiertes Aufreißen und/oder Verformen des Grundkörpers an einen Empfänger zu übermitteln. Damit kann beispielsweise ein Alarmsignal an Behörden oder wartungsdienste ausgegeben werden, die das Bremselement überprüfen und auswechseln können. Auf diese Weise kann beispielsweise auch eine Lawinenwarnung erzeugt werden.

Mit Vorteil weist die Sollbruchstellenanordnung in Form einer Doppelspirale ein Zentrum auf, an dem die zwei gegenläufigen Spiralen ineinander übergehen. Dieses Zentrum ist also ein Ort, an dem die beiden Spiralen miteinander verbunden sind und der üblicherweise auch in der Mitte des Bremselements angeordnet ist, um eine symmetrische Ausgestaltung der beiden die Doppelspirale bildenden Spiralen zu ermöglichen. Dieses Zentrum ist durch zwei langlochförmige Sollbruchstellen definiert, indem diese langlochförmigen Sollbruchstellen das Zentrum bereichsweise umgeben. Bei diesen langlochförmigen Sollbruchstellen kann es sich vorzugsweise um zwei langlochförmige Perforationen, Einkerbungen oder durchgehende Löcher handeln, die beispielsweise wie das "Taji" oder "Hotu" Symbol für Yin und Yang geformt und um das Zentrum der Doppelspirale angeordnet sind. Durch die Sollbruchstellen, die um das Zentrum des Bremselements angeordnet sind, kann sich das Bremselement bis zu seiner vollständigen Streckung definiert entrollen und hohen Belastungen standhalten. Die bevorzugte Ausgestaltung der im Zentrum befindlichen und damit in Richtung des Entrollens des Bremselements zuletzt betroffenen Sollbruchstellen erleichtert eine klar definierte Streckung des Grundkörpers. Sie vermeidet ein Aufreißen des Grundkörpers in unmittelbarer Umgebung seines Zentrums, was zur Schwächung des Grundkörpers im gestreckten Zustand führen könnte. Daher trägt die bevorzugte Ausgestaltung der Sollbruchstellen dazu bei, das Bremselement gegenüber großen Belastungen besonders widerstandsfähig zu machen.

Das erfindungsgemäße Bremselement ermöglicht besonders leicht, Bremslänge oder Bremsweg und Energieaufnahmevermögen bedarfsbezogen anzupassen. Beispielsweise kann dies durch das Ausmaß der Schwächung des Grundkörpers entlang der Sollbruchstellenanordnung, durch die Größe des Grundkörpers, durch die Wahl des Materials des Grundkörpers und auch durch den Verlauf der Aufreißstrecke, insbesondere der Sollbruchstellenanordnung realisiert werden.

Eine erfindungsgemäße Auffangvorrichtung, insbesondere für Steinschlag, Murgang, Hangmuren, Rutschungen oder Baumschlag, weist ein Bremselement gemäß der vorhergehenden Beschreibung auf. Durch dieses Bremselement ist es möglich, die Auffangvorrichtung gegenüber besonders heftigen Einschlägen abzusichern, sodass die erfindungsgemäße Auffangvorrichtung besonders zuverlässig auch gegenüber intensiven Einschlägen arbeitet.

Damit wird eine weitere Aufgabe der vorliegenden Erfindung gelöst, nämlich eine Auffangvorrichtung bereitzustellen, die gegenüber heftigen Einschlägen, welche die Belastbarkeit der eingesetzten Rückhalteseile übersteigen würden, verbessert ist und dabei platzsparend und vielseitig einsetzbar ist.

Bevorzugt ist das Bremselement dabei derart angeordnet, dass die erste Befestigungsstelle mit einer Barriere, insbesondere einem Auffangnetz, und die zweite Befestigungsstelle mit einer Verankerung der Auffangvorrichtung wirkverbunden sind. Auf diese Weise ist das Bremselement entlang der Zugkraft zwischen der Barriere und ihrer Verankerung angeordnet, sodass es besonders effizient gegenüber der auf die Barriere eintreffenden kinetischen Energie reagieren kann.

Es ist möglich, mehrere Bremselemente parallel in einer Auffangvorrichtung einzusetzen. Dabei können die Bremselemente hinsichtlich ihrer Widerstandsfestigkeit und ihrer Bremslänge aufeinander abgestimmt werden, d.h. gleiche oder gezielt verschiedene Werte annehmen.

Die Erfindung betrifft ferner ein Verfahren zur Herstellung eines Bremselements gemäß der obigen Beschreibung. Dabei wird ein plattenförmiger Grundkörper durch zerspanungsfreies Arbeiten, insbesondere durch Laserstrahlschneiden oder durch Wasserstrahlschneiden mit einer Sollbruchstellenanordnung versehen. Ein alternatives erfindungsgemäßes Verfahren zur Herstellung eines solchen Bremselements sieht vor, dass ein plattenförmiger Grundkörper durch zerspanendes Bearbeiten, insbesondere Sägen oder Bohren, mit einer Sollbruchstellenanordnung versehen wird.

Sofern der Grundkörper bevorzugt eine singuläre Scheibe ist, ist es durch das erfindungsgemäße Verfahren möglich, das Bremselement weitestgehend fertigzustellen. Es sind also keine weiteren Fertigungsschritte an dem Bremselement nötig, sofern die Befestigungsstellen bereits an dem Grundkörper vorgesehen sind.

Ein weiteres alternatives Verfahren zur Herstellung eines Bremselements sieht vor, entlang einer als Nut ausgebildeten Aufreißstrecke Materialbrücken durch einzelne Schweißverbindungen oder Schweißpunkte entlang der Nut zu erzeugen. Diese Schweißpunkte werden dann so ausgebildet, dass sie bei Belastung über einen definierten Betrag hinaus als Sollbruchstellen entlang der Nut aufreißen und sich der Grundkörper dadurch verformen kann.

Durch das vorstehend beschriebene Bremselement wird die oben aufgeführte Aufgabe der Erfindung gelöst und die Nachteile aus dem Stand der Technik werden überwunden. Insbesondere ist es möglich, ein Bremselement bereitzustellen, das eine Beschädigung von Zugseilen weitestgehend ausschließt, dabei besonders kompakt ausgestaltet ist und eine zuverlässige Beurteilung einer verbleibenden Belastbarkeit des Bremselements ermöglicht, auch wenn das Bremselement bereits einer ersten Belastung unterworfen war. Da das Bremselement reibungsfrei und ohne bewegliche Teile arbeitet, ist es gegenüber Verschmutzung vollkommen unempfindlich.
Weitere vorteilhafte Merkmale und Effekte der Erfindung ergeben sich aus der nachfolgenden Figurenbeschreibung und der Gesamtheit der Ansprüche.

### KURZE FIGURENBESCHREIBUNG

Fig. 1 zeigt ein Bremselement in einer bevorzugten ersten Ausführungsform.
Fig. 2 zeigt ein Bremselement in einer bevorzugten zweiten Ausführungsform.
Fig. 3 zeigt ein Bremselement in einer bevorzugten dritten Ausführungsform.
Fig. 4 zeigt ein Bremselement in einer bevorzugten vierten Ausführungsform.

### WEGE ZUR AUSFÜHRUNG DER ERFINDUNG

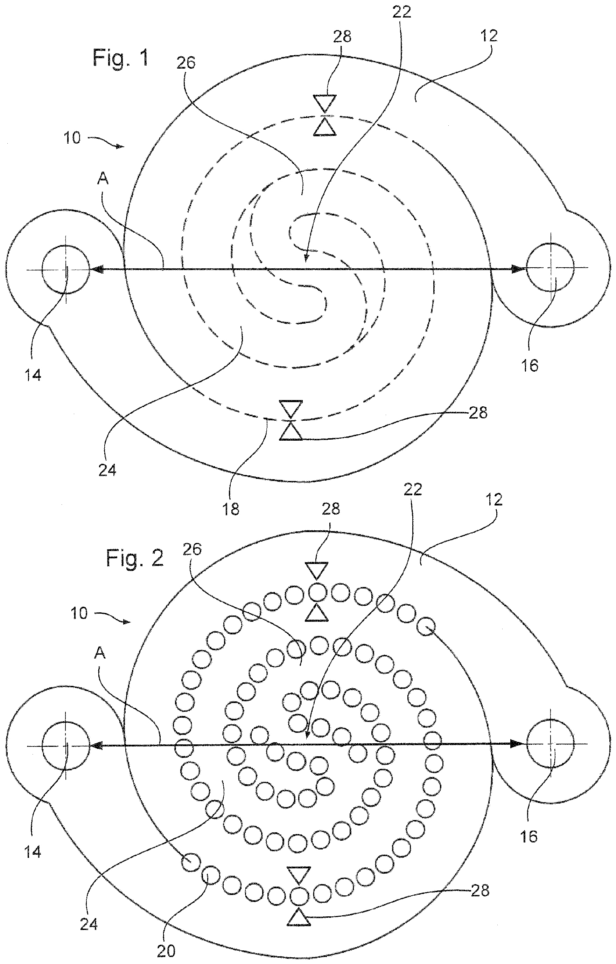

Fig. 1 zeigt ein Bremselement 10 gemäß einer ersten bevorzugten Ausführungsform. Das Bremselement 10 weist einen scheibenförmigen Grundkörper 12 auf, der im Wesentlichen kreisförmig ausgestaltet ist und auf einander gegenüberliegenden Seiten eine erste Befestigungsstelle 14 und eine zweite Befestigungsstelle 16 aufweist. Diese Befestigungsstellen 14, 16 sind in der bevorzugten Ausführungsform durch Ösen gebildet, die zur Aufnahme eines Zugseiles, einer Zugstange oder eines ähnlichen Zugelements ausgestaltet sind. Beispielsweise kann durch einen Schäkel oder eine ähnliche Befestigungsvorrichtung ein Zugelement an den Befestigungsstellen 14, 16 angebracht werden.

Die Befestigungsstellen 14, 16 haben einen Abstand A voneinander, der entlang der direkten und damit kürzesten Wegstrecke zwischen den beiden einander zugeordneten Befestigungsstellen 14, 16 gemessen wird. Dieser Abstand A verläuft auch entlang einer Zugkraft, die zwischen den Befestigungsstellen 14, 16 wirken würde, wenn die an den Befestigungsstellen 14, 16 angebrachten Zugelemente gegeneinander auf Zug belastet werden. Diese Zugkraft wirkt dann so, dass sich die Befestigungsstellen 14, 16 voneinander entfernen möchten, woran sie durch die Festigkeit des Materials des Grundkörpers 12 gehindert werden.

Der Grundkörper 12 weist eine Sollbruchstellenanordnung 18 auf, die in der in Fig. 1 gezeigten Ausführungsform durch einen Steg querschnittsreduzierter Materialbrücken in Form mehrerer Einkerbungen gebildet wird. Diese Sollbruchstellenanordnung 18 ist in der in Fig. 1 gezeigten Ausführungsform in der Form einer Spirale 22 ausgestaltet, wobei die Spirale 22 der in Fig. 1 gezeigten Ausführungsform eine Doppelspirale aus einer ersten Spirale 24 und einer zweiten Spirale 26 bildet. Die Spirale 22 gemäß dieser bevorzugten Ausführungsform ist so gestaltet, dass das Aufreißen des Grundkörpers im Belastungsfall im Bereich der Befestigungsstellen 14, 16 beginnt und sich nach innen hin kontinuierlich unter Verformung des Grundkörpers 12 fortsetzt.

Durch die Sollbruchstellenanordnung 18 reißt der Grundkörper 12 bei Überschreiten eines vorbestimmten Betrages einer Zugkraft zwischen den Befestigungsstellen 14, 16 spiralförmig auf, nämlich entlang der Sollbruchstellenanordnung 18. Gleichzeitig verformt sich das Material des Grundkörpers 12, indem sich die durch die Sollbruchstellenanordnung 18 definierte Spirale 22 entrollt, das heißt sich das Material unter Aufreißen und Verformen des Grundkörpers 12 entlang der Zugkraft streckt. Auf diese Weise vergrößert sich der Abstand A zwischen den Befestigungsstellen 14, 16 durch kontinuierliches Aufreißen und Verformen des Grundkörpers 12, sobald eine Zugkraft oberhalb eines vorbestimmten Betrages an die Befestigungsstellen 14, 16 angelegt wird.

Der Grundkörper 12 entrollt sich bei anhaltender Zugkraft kontinuierlich durch Aufreißen und Verformen des Grundkörpers 12 solange, bis die Spirale 22 vollständig entrollt und der Grundkörper 12 vollständig gestreckt ist. In diesem Zustand nimmt das Bremselement 10 seine maximale Ausdehnung ein. Das Bremselement 10 ist also dazu geeignet, den an dem Bremselement 10 angebrachten Zugelementen ein Nachgeben zu ermöglichen, wobei die Bremslänge oder der Bremsweg, das heißt die Länge oder der Weg, über die/den sich der Abstand zwischen den Befestigungsstellen 14, 16 bei Anlegen einer entsprechenden Zugkraft vergrößern kann, durch die Differenz zwischen der Gesamtlänge der Spirale in vollständig entrolltem Zustand und dem Abstand A zwischen den Befestigungsstellen 14, 16 im in Fig. 1 dargestellten Grundzustand definiert ist. Diese Bremslänge ist verglichen mit den Ausdehnungen des Grundkörpers 12 im Grundzustand sehr lang. Eine kompakte Bauweise eines Bremselements ist also möglich, wobei gleichzeitig ein großer Betrag kinetischer Energie aufgenommen werden kann, die auf eine Auffangvorrichtung wirkt, in die das Bremselement 10 eingebaut ist.

Für ein teilweises Aufreißen und Verformen des Grundkörpers 12 sind Markierungen 28 vorgesehen, die in Fig. 1 als einander gegenüberliegende Dreiecke beidseitig der Sollbruchstellenanordnung 18 beispielhaft dargestellt sind. Sofern der Grundkörper 12 bei Inanspruchnahme des Bremselements 10 bereits zum Teil aufgerissen und verformt ist, zeigen die Markierungen 28 an, wie viel kinetische Energie das Bremselement 10 bei einem nochmaligen Belasten auf die beschriebene Weise in Verformungsenergie umwandeln kann. Die Markierungen 28 in Fig. 1 sind nur beispielhaft dargestellt und können auch an jeder anderen Stellen entlang der Sollbruchstellenanordnung vorgesehen sein. Es ist auch möglich, dass mehrere Markierungen vorgesehen sind, die eine genauere Anzeige der durch das Bremselement 10 bereits umgewandelten kinetischen Energie ermöglichen. An der Position der Markierung 28 oder an anderen oder mehreren Positionen können beispielsweise Kontaktsensoren angeordnet sein, die als Deformationssensoren einsetzbar sind. Durch diese elektronischen Elemente ist es möglich, auch von Ferne den Aufreiß- oder Verformungszustand des Bremselements zu überprüfen.

Fig. 2 zeigt eine andere Ausführungsform des Bremselements 10, wobei die meisten Elemente des Bremselements 10 mit denen der in Fig. 1 dargestellten Ausführungsform übereinstimmen. Gleiche Elemente werden durch gleiche Bezugszeichen bezeichnet und ihre Beschreibung wird im Folgenden ausgelassen.

Abweichend von der in Fig. 1 gezeigten Ausführungsform ist die Sollbruchstellenanordnung 20 in der in Fig. 2 gezeigten Ausführungsform durch eine durch mehrere Blindbohrungen gebildete Perforation gebildet. Die Blindbohrungen der Sollbruchstellenanordnung 20 können alternativ jedoch auch durchgehend ausgebildet werden. In diesem Fall ist die Sollbruchstellenanordnung 20 durch hintereinander entlang der gewünschten Aufreißstrecke der Sollbruchstellenanordnung angeordnete, durchgehende Löcher gebildet.

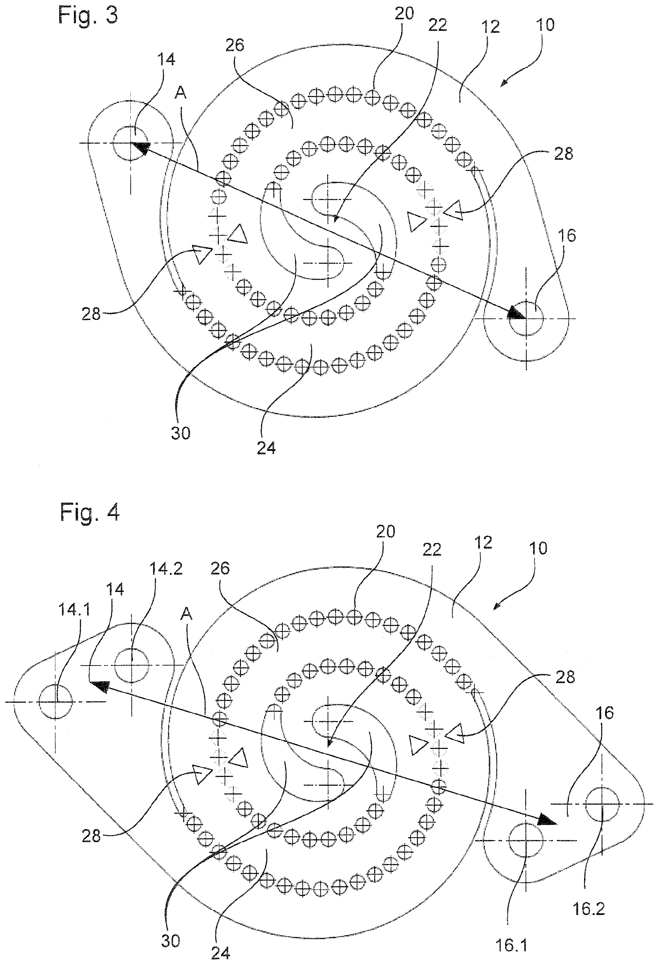

Abweichend von der Ausführungsform gemäß Fig. 2 weist das Bremselement 10 gemäß Fig. 3 zwei langlochförmige Sollbruchstellen 30 auf, die ein Zentrum der Spirale 22 umgeben. Diese Sollbruchstellen 30 erleichtern ein definiertes Entrollen des Grundkörpers 12 im Bereich des Zentrums und erhöhen dadurch die Widerstandsfähigkeit des Bremselements 10 gegenüber besonders hohen Belastungen. Im Übrigen gleicht die Ausführungsform gemäß Fig. 3 derjenigen der Fig. 2.

Die in Fig. 4 dargestellte Ausführungsform weicht von derjenigen der Fig. 3 in der Ausgestaltung der ersten und zweiten Befestigungsstelle 14, 16 ab. Während die Ausführungsformen gemäß der Figuren 1 bis 3 jeweils eine einzige Öse als erste Befestigungsstelle 14 und zweite Befestigungsstelle 16 aufweisen, ist bei der Ausführungsform gemäß Fig. 4 vorgesehen, zwei Ösen 14.1, 14.2 als erste Befestigungsstelle 14 und zwei Ösen 16.1, 16.2 als zweite Befestigungsstelle 16 einzusetzen. Dadurch können größere Lasten auf das Bremselement 10 übertragen werden als im Fall nur einer Öse wie in Figuren 1 bis 3. Im Übrigen gleicht die Ausführungsform gemäß Fig. 4 derjenigen der Fig. 3.

Sowohl die Einkerbungen der Sollbruchstellenanordnung 18 gemäß Fig. 1 als auch die Blindbohrungen oder Perforationen der Sollbruchstellenanordnung 20 gemäß Fig. 2, 3 und 4 führen zu einer gezielten Schwächung des Grundkörpers 12 entlang dem Verlauf dieser Elemente. Dadurch reißt der Grundkörper 12 entlang dieser durch die Sollbruchstellenanordnung 18, 20 vorbestimmten Aufreißstrecke auf, was eine besonders effiziente Nutzung des Materials des Grundkörpers 12 ermöglicht, indem beispielsweise ein spiralförmiges Entrollen des Grundkörpers 12 vorgegeben wird, was eine relativ große Bremslänge des Bremselements bei gleichzeitig kompaktem Grundzustand ermöglicht.

Grundsätzlich ist es jedoch auch möglich, dass der Grundkörper 12 eine andere als die in den Figuren 1 bis 4 gezeigte Gestalt annimmt und die Sollbruchstellenanordnung 18, 20 kann auch anders als spiralförmig ausgestaltet sein. Insbesondere ist es möglich, dass der Grundkörper 12 eine rechteckige Form aufweist, die beispielsweise durch eine gezielte Einbringung schwächeren Materials oder durch geometrische Schwächung entlang einer vorgestimmten Aufreißstrecke aufreißen kann, um dadurch den Abstand zwischen den Befestigungsstellen durch kontinuierliches Aufreißen und Verformen des Grundkörpers zu vergrößern, wenn eine entsprechend große Zugkraft auf die Befestigungsstellen 14, 16 wirkt.

## Patentansprüche

1. Bremselement (10) zur Absorption kinetischer Energie in einer Auffangvorrichtung, insbesondere für Steinschlag, Murgang, Hangmuren, Rutschungen oder Baumschlag, umfassend
einen Grundkörper (12) mit einer ersten (14) und einer zweiten Befestigungsstelle (16), wobei an der ersten und zweiten Befestigungsstelle (14, 16) jeweils ein Zugelement derart angeordnet sein kann, dass durch die Zugelemente eine auf das Bremselement (10) zwischen den Befestigungsstellen (14, 16) wirkende Zugkraft angelegt werden kann,
wobei die erste und die zweite Befestigungsstelle (14, 16) einen Abstand (A) entlang der Zugkraft voneinander haben,
**dadurch gekennzeichnet, dass**
das Bremselement (10) derart ausgestaltet ist, dass sich der Abstand (A) zwischen den Befestigungsstellen (14, 16) durch kontinuierliches Aufreißen und Verformen des Grundkörpers (12) entlang einer vorbestimmten Aufreißstrecke vergrößert, wenn die Zugkraft einen vorbestimmten Betrag übersteigt, wobei die Aufreißstrecke in dem Grundkörper durch eine Sollbruchstellenanordnung (18, 20) vorbestimmt ist.

2. Bremselement (10) nach Anspruch 1, wobei die Sollbruchstellenanordnung (18, 20) einen Steg einer oder mehrerer querschnittsreduzierter Materialbrücken aufweist, die optional durch Schweißpunkte gebildet sind.

3. Bremselement (10) nach Anspruch 1 oder 2, wobei die Sollbruchstellenanordnung (20) eine oder mehrere Perforationen, Einkerbungen und/oder Blindbohrungen aufweist.

4. Bremselement (10) nach einem der Ansprüche 1 bis 3, wobei die Sollbruchstellenanordnung (18, 20) kurvenförmig ist.

5. Bremselement (10) nach einem der vorhergehenden Ansprüche, wobei die Aufreißstrecke eine Doppelspirale (22) aus zwei gegenläufigen, ineinander übergehenden Spiralen (24, 26) oder eine gerade oder mäandrierende Linie oder, im Fall eines zylindermantelförmigen Grundkörpers (10), einen schraubenförmigen Verlauf in dem Grundkörper (10) bildet.

6. Bremselement (10) nach einem der vorherigen Ansprüche, wobei an einem ersten Ende der als Doppelspirale (22) ausgebildeten Aufreißstrecke die erste Befestigungsstelle (14) angeordnet ist und an einem zweiten Ende der als Doppelspirale (22) ausgebildeten Aufreißstrecke die zweite Befestigungsstelle (16) angeordnet ist.

7. Bremselement (10) nach einem der vorherigen Ansprüche, wobei sich die Aufreißstrecke, insbesondere die Doppelspirale (22), durch kontinuierliches Aufreißen und Verformen des Grundkörpers (12) entrollt, wenn die Zugkraft einen vorbestimmten Betrag übersteigt.

8. Bremselement (10) nach einem der vorhergehenden Ansprüche, wobei der Grundkörper (12) scheibenförmig ist, insbesondere mehrere aufeinander und parallel zueinander angeordnete Scheiben aufweist.

9. Bremselement (10) nach einem der vorhergehenden Ansprüche, wobei der Grundkörper (12) aus Metall, insbesondere aus Stahl, oder aus einem Verbundwerkstoff gefertigt ist und/oder als Gussteil ausgebildet ist.

10. Bremselement (10) nach einem der vorhergehenden Ansprüche, das eine Markierung (28), die eine Restnutzlänge des Bremselements (10) anzeigt, und/oder einen Deformationssensor, der ein Aufreißen und/oder Verformen des Grundkörpers detektieren kann, aufweist, wobei das Bremselement bevorzugt einen Sender aufweist, um ein von dem Deformationssensor detektiertes Aufreißen und/oder Verformen des Grundkörpers an einen Empfänger zu übermitteln.

11. Bremselement (10) nach einem der vorhergehenden Ansprüche, wobei die Doppelspirale (22) ein Zentrum aufweist, an dem die zwei gegenläufigen Spiralen (24, 26) ineinander übergehen, wobei das Zentrum durch zwei langlochförmige Sollbruchstellen definiert ist.

12. Auffangvorrichtung, insbesondere für Steinschlag, Murgang, Hangmuren, Rutschungen oder Baumschlag, die ein Bremselement (10) nach einem der vorhergehenden Ansprüche aufweist.

13. Auffangvorrichtung nach Anspruch 12, in der das Bremselement (10) derart angeordnet ist, dass die erste Befestigungsstelle (14) mit einer Barriere, insbesondere einem Auffangnetz, und die zweite Befestigungsstelle (16) mit einer Verankerung der Auffangvorrichtung wirkverbunden sind.

14. Verfahren zur Herstellung eines Bremselements (10) nach einem der Ansprüche 1 bis 11, wobei ein plattenförmiger oder zylindermantelförmiger Grundkörper (12) mit einer definierten Aufreißstrecke versehen wird.

15. Verfahren nach Anspruch 14 wobei die Sollbruchstellenanordnung durch zerspanungsfreies Arbeiten, insbesondere Laserstrahlschneiden oder Wasserstrahlschneiden, oder durch zerspanendes Bearbeiten, insbesondere Sägen oder Bohren, oder durch Schweißen einzelner beabstandeter Schweißpunkte erzeugt wird.

## Claims

1. Braking element (10) for the absorption of kinetic energy in a catch device, in particular for falling rocks, mudslides, slope-type debris flows, landslides or falling trees, comprising
a base body (12) with a first (14) and a second (16) fastening point, wherein at each of the first and second fastening points (14, 16) a tensile member can be arranged in such a way that a tensile force acting on the braking element (10) between the fastening points (14, 16) can be applied by the tensile members,
wherein the first and second fastening points (14, 16) are spaced apart by a distance (A) along the tensile force,
**characterised in that**
the braking element (10) is designed in such a way that the distance (A) between the fastening points (14, 16) increases along a predetermined tear zone by continuous tearing and deformation of the base body (12) when the tensile force exceeds a predetermined amount, wherein the tear zone in the base body is predetermined by a predetermined breaking point arrangement (18, 20).

2. Braking element (10) according to claim 1, wherein the predetermined breaking point arrangement (18, 20) has a web of one or more bridges of material of reduced cross-section which are optionally formed by welding spots.

3. Braking element (10) according to claim 1 or 2, wherein the predetermined breaking point arrangement (20) has one or more perforations, notches and/or blind bores.

4. Braking element (10) according to any of claims 1 to 3, wherein the predetermined breaking point arrangement (18, 20) is curved.

5. Braking element (10) according to any of the preceding claims, wherein the tear zone has a double spiral (22) consisting of two spirals (24, 26) merging with each other and running in opposite directions or a straight or meandering line or, in the case of a cylinder jacket-like base body (10), forms a helical course in the base body (10).

6. Braking element (10) according to any of the preceding claims, wherein at a first end of the tear zone formed as a double spiral (22) the first fastening point (14) is arranged, and at a second end of the tear zone formed as a double spiral (22) the second fastening point (16) is arranged.

7. Braking element (10) according to any of the preceding claims, wherein the tear zone, in particular the double spiral (22), uncoils by continuous tearing and deformation of the base body (12) when the tensile force exceeds a predetermined amount.

8. Braking element (10) according to any of the preceding claims, wherein the base body (12) is disc-shaped, and in particular has a plurality of discs arranged on top of and parallel to one another.

9. Braking element (10) according to any of the preceding claims, wherein the base body (12) is made from metal, in particular steel, or from a composite material, and/or is designed as a casting.

10. Braking element (10) according to any of the preceding claims, which has a marking (28) which indicates a residual useful length of the braking element (10), and/or a deformation sensor which can detect tearing and/or deformation of the base body, wherein the braking element preferably has a transmitter in order to transmit tearing and/or deformation of the base body detected by the deformation sensor, to a receiver.

11. Braking element (10) according to any of the preceding claims, wherein the double spiral (22) has a centre at which the two spirals (24, 26) running in opposite directions merge with each other, wherein the centre is defined by two slot-like predetermined breaking points.

12. Catch device, in particular for falling rocks, mudslides, slope-type debris flows, landslides or falling trees, which has a braking element (10) according to any of the preceding claims.

13. Catch device according to claim 12, in which the braking element (10) is arranged in such a way that the first fastening point (14) is operatively connected to a barrier, in particular a catch net, and the second fastening point (16) is operatively connected to a means for anchoring the catch device.

14. Method for manufacturing a braking element (10) according to any of claims 1 to 11, wherein a plate-like or cylinder jacket-like base body (12) is provided with a predefined tear zone.

15. Method according to claim 14, wherein the predetermined breaking point arrangement is produced by working without cutting, in particular laser beam cutting or water jet cutting, or by machining, in particular sawing or drilling, or by welding individual spaced-apart welding spots.

## Revendications

1. Elément de freinage (10) pour l'absorption d'énergie cinétique dans un dispositif d'interception, en particulier pour des chutes de pierres, des coulées de boue, des coulées de terre, des glissements de terrain ou des chutes d'arbres, comprenant
un corps de base (12) avec un premier emplacement de fixation (14) et un second emplacement de fixation (16), dans lequel respectivement un élément de traction peut être agencé de telle manière au niveau du premier et du second emplacement de fixation (14, 16) qu'une force de traction agissant sur l'élément de freinage (10) entre les emplacements de fixation (14, 16) peut être appliquée par les éléments de traction,
dans lequel les premier et second emplacements de fixation (14, 16) sont à une distance (A) l'un de l'autre le long de la force de traction,
**caractérisé en ce que**
l'élément de freinage (10) est configuré de telle manière que la distance (A) entre les emplacements de fixation (14, 16) augmente par déchirement et déformation continus du corps de base (12) le long d'un tracé de déchirement prédéterminé lorsque la force de traction dépasse une valeur prédéterminée, dans lequel le tracé de déchirement dans le corps de base est prédéterminé par un ensemble de points de rupture de consigne (18, 20).

2. Elément de freinage (10) selon la revendication 1, dans lequel l'ensemble de points de rupture de consigne (18, 20) présente une traverse d'un ou de plusieurs ponts de matière, dont la section transversale est réduite et qui sont formés en option par des points de soudure.

3. Elément de freinage (10) selon la revendication 1 ou 2, dans lequel l'ensemble de points de rupture de consigne (20) présente une ou plusieurs perforations, entailles et/ou un ou plusieurs trous borgnes.

4. Elément de freinage (10) selon l'une quelconque des revendications 1 à 3, dans lequel l'ensemble de points de rupture de consigne (18, 20) est de forme courbe.

5. Elément de freinage (10) selon l'une quelconque des revendications précédentes, dans lequel le tracé de déchirement forme, dans le corps de base (10), une double spirale (22) composée de deux spirales (24, 26) s'enroulant en sens contraire et allant l'une dans l'autre ou une ligne droite ou sinueuse ou, dans le cas d'un corps de base (10) en forme d'enveloppe de cylindre, un profil hélicoïdal.

6. Elément de freinage (10) selon l'une quelconque des revendications précédentes, dans lequel le premier emplacement de fixation (14) est agencé au niveau d'une première extrémité du tracé de déchirement réalisé sous la forme d'une double spirale (22), et le second emplacement de fixation (16) est agencé au niveau d'une seconde extrémité du tracé de déchirement réalisé sous la forme d'une double spirale (22).

7. Elément de freinage (10) selon l'une quelconque des revendications précédentes, dans lequel le tracé de déchirement, en particulier la double spirale (22), se déroule par déchirement et déformation continus du corps de base (12) lorsque la force de traction dépasse une valeur prédéterminée.

8. Elément de freinage (10) selon l'une quelconque des revendications précédentes, dans lequel le corps de base (12) est en forme de disque et présente en particulier plusieurs disques agencés les uns sur les autres et parallèlement les uns aux autres.

9. Elément de freinage (10) selon l'une quelconque des revendications précédentes, dans lequel le corps de base (12) est fabriqué à partir de métal, en particulier d'acier, ou à partir d'un matériau composite et/ou est réalisé sous la forme d'une pièce moulée en fonte.

10. Elément de freinage (10) selon l'une quelconque des revendications précédentes, qui présente un repère (28) qui indique une longueur d'utilisation restante de l'élément de freinage (10), et/ou un capteur de déformation, qui peut détecter un déchirement et/ou une déformation du corps de base, dans lequel l'élément de freinage présente de manière préférée un émetteur pour transmettre à un récepteur un déchirement et/ou une déformation du corps de base qui ont été détectés par le capteur de déformation.

11. Elément de freinage (10) selon l'une quelconque des revendications précédentes, dans lequel la double spirale (22) présente un centre, au niveau duquel les deux spirales (24, 26) de sens contraire passent l'une dans l'autre, dans lequel le centre est défini par deux points de rupture de consigne en forme de trous allongés.

12. Dispositif d'interception, en particulier pour des chutes de pierres, des coulées de boue, des coulées de terre, des glissements de terrain ou des chutes d'arbres, qui présente un élément de freinage (10) selon l'une quelconque des revendications précédentes.

13. Dispositif d'interception selon la revendication 12, où l'élément de freinage (10) est agencé de telle manière que le premier emplacement de fixation (14) est en liaison active avec une barrière, en particulier avec un filet d'interception, et que le second emplacement de fixation (16) est en liaison active avec un ancrage du dispositif d'interception.

14. Procédé pour la fabrication d'un élément de freinage (10) selon l'une quelconque des revendications 1 à 11, dans lequel un corps de base (12) en forme de plaque ou d'enveloppe de cylindre est muni d'un tracé de déchirement défini.

15. Procédé selon la revendication 14, dans lequel l'ensemble de points de rupture de consigne est produit par usinage sans enlèvement de copeaux, en particulier par découpe au faisceau laser ou par découpe au jet d'eau, ou par usinage avec enlèvement de copeaux, en particulier par sciage ou perçage, ou par soudage de divers points de soudure distants.
